# EUROPÄISCHE PATENTANMELDUNG

(11) **EP 1 586 233 A1**
(43) Veröffentlichungstag der Anmeldung: **19.10.2005**
(21) Anmeldenummer: 05450037.6
(22) Anmeldetag: 03.03.2005
(51) Int. Cl.: A01G 1/08, E01F 9/08

(54) **Randbegrenzung, insbesondere für Gartenwege, Gehwege und Gehsteige**

(30) Priorität: 25.03.2004 AT 5252004; 25.11.2004 AT 8562004 U
(71) Anmelder: Gatterbauer, Rupert, Jun., 5270 Mauerkirchen (AT)
(72) Erfinder: Gatterbauer, Rupert, Jun., 5270 Mauerkirchen (AT)
(74) Vertreter: Hübscher, Helmut

(57) **Zusammenfassung**

Eine Randbegrenzung, insbesondere für Gartenwege, Gehwege und Gehsteige, mit einem Längsträger (11), der mit einem Leuchtmittel (9) versehen ist und mit Halterungen (2) im Untergrund verankerbar ist, besteht aus einem Strangpreßprofil mit einem ein über die Länge durchlaufender Befestigungssteg (2) an dem einen Kopfteil (1) bildenden Längsträger. Der Kopfteil besteht oberseitig aus einem Streifen (9) aus einem eine Leuchtfarbe aufweisenden Material oder besitzt eine Auflage aus einem entsprechenden Material und ist mit dem durchlaufenden Befestigungssteg (2) in einen Bodenschlitz, Graben od. dgl. des Untergrundes einsetzbar, so daß er durch Ausfüllen des Grabens bzw. Schlitzes z. B. mit dem Aushubmaterial bzw. bei einem festen, z. B. aus Asphalt bestehenden Untergrund mit einen vorzugsweise mit dem Schlitzrand abbindenden Füllmaterial verankerbar ist.

## Beschreibung

Die Erfindung bezieht sich auf eine Randbegrenzung, insbesondere für Gartenwege, Gehwege und Gehsteige, aber auch für andere Anwendungsfälle, z. B. Verkehrsflächenbegrenzungen, Fahrstreifenmarkierungen usw., mit einem Längsträger, der wenigstens oberseitig mit einem Leuchtmittel versehen und mit Halterungen im Untergrund verankerbar ist.

Eine derartige Randbegrenzung ist aus der US 5 410 458 bekannt. Dabei wird ein über die Länge der Randbegrenzung durchlaufendes, geschlitztes Rohr verwendet, das in obere Ösen von abstandsweise anzubringenden Bodenankern eingeführt wird und in das über den Schlitz als Leuchtmittel eine Lichterkette, wie sie z. B. von Weihnachtsbeleuchtungen her bekannt ist, eingezogen werden kann. Die Bodenanker können stückweise aus vorgeformten Profilen abgelängt werden und können zusätzlichen Verankerungsrippen oder Endkrümmungen zur Verbesserung der Bodenhaftung aufweisen. Wegen des notwendigen Schlitzes ist das Rohr der Verschmutzung ausgesetzt und die Leuchtmittel sind bei schlechten Witterungsverhältnissen nur ungenügend geschützt. Die Verlegung erfolgt in der Weise, daß der Rohrteil z. B. mit der Grasnarbe abschließt. Damit ist unter dem Rohrteil und zwischen den Stützen eine Durchwurzelung möglich und es können auch Kleintiere, z. B. Ameisen, ohne Schwierigkeiten von der einen zur anderen Seite der Abgrenzung gelangen.

Elektrische Lampen als Leuchtmittel benötigen eigene entsprechend isoliert zu führende Anschlüsse und es ergeben sich Schwierigkeiten, eine etwa gleichmäßige Beleuchtung des Randstreifens zu erzielen.

Zur Verringerung des Energieverbrauches werden bei anderen Randbegrenzungen Leuchtdioden verwendet, die zusätzlich bei abstandsweiser Anordnung in lichtleitendes Material eingebettet sind, wobei etwa nach der EP 0 658 655 B1 in das lichtdurchlässige Material Glaskugeln eingebettet werden, um eine bessere Lichtverteilung zu erzielen. Das Leuchtmittel bildet einen Streifen, der erst mit seinen Zuleitungen auf einem entsprechenden Träger montiert werden muß und mit diesen dann am Rand des jeweiligen Weges bzw. Fahrbahnteiles meist erhöht angebracht wird.

Nach der EP 724 670 B1 wird zur Befestigung des Leuchtmittels ein im wesentlicher plattenförmiger Bauteil verwendet, der in einer mittleren Erhöhung eine Einschiebeführung für entsprechende mit Leuchtdioden versehene Leuchtmittelstreifen aufweist, wobei diese Streifen meist schräg über die weitere Oberfläche des plattenförmigen Bauteiles ragen. Die Platte wird mit Schrauben am Untergrund befestigt.

Für andere Zwecke werden auf einem auf eine Oberfläche aufklebbaren Materialstreifen abstandsweise durch Kuppeln abgedeckte Leuchtdioden angebracht, für die wieder eine eigene Versorgung notwendig ist. Ein Ausführungsbeispiel zu dieser Form entnimmt man der DE 36 07 866 A1. Aus der DE 203 15 378 U1 sind ferner mit mehreren Leuchtdioden ausgestattete Straßennägel bekannt.

Aufgabe der Erfindung ist die Schaffung einer Randbegrenzung, die sowohl bei oder vor der Errichtung von Garten- und Gehwegen bzw. Gehsteigen als auch nachträglich angebracht werden kann, einfach herstellbar ist, keine gesonderte Energieversorgung benötigt und überdies auch weitere Aufgaben übernehmen kann. Eine Zusatzaufgabe besteht darin, die Randbegrenzung so auszubilden, daß ihr Einbau ohne Schwierigkeiten vor sich gehen kann und sie im Gartenbereich auch zur Verhinderung der Durchwurzelung und des Insektenübertrittes eingesetzt werden kann.

Prinzipiell wird die erfindungsgemäße Aufgabe dadurch gelöst, daß bei der aus einem Strangpreßprofil bestehenden Randbegrenzung ein über die Länge durchlaufender Befestigungssteg als an den rohrförmigen, einen Kopfteil bildenden Längsträger vorgesehen ist, der Kopfteil oberseitig aus einem Streifen aus einem eine Leuchtfarbe aufweisenden Material besteht oder eine Auflage aus einem entsprechenden Material besitzt und mit dem durchlaufenden Befestigungssteg in einen Bodenschlitz, Graben od. dgl. des Untergrundes einsetzbar ist, so daß er durch Ausfüllen des Grabens bzw. Schlitzes z. B. mit dem Aushubmaterial bzw. bei einem festen, z. B. aus Asphalt bestehenden Untergrund mit einen vorzugsweise mit dem Schlitzrand abbindenden Füllmaterial verankerbar ist. Die verwendete Leuchtfarbe hat luminizierende Eigenschaften und ist daher nach entsprechender Beleuchtung durch die Sonne oder äußere Lichtquellen lange Zeit selbst leuchtfähig, ohne daß dazu elektrische Anschlüsse notwendig wären. Es wird eine eindeutige Abgrenzung des Randstreifens erzielt. Der Kopfteil kann rohrförmig ausgebildet sein und für verschiedene Zwecke zusätzlich ausgenützt werden, wobei die Anbringung und auch der Transport der Randbegrenzung problemlos ermöglicht ist.

Um dem Steg einen ausreichenden Halt im Untergrund zu geben, kann er mit Abstand vom Kopf und seinem gegebenenfalls zu einer Schneide ausgebildeten unteren Rand seitlich vorstehende einen Fußteil bildende Stützflansche und vorzugsweise zwischen diesen und dem Kopf kürzere, schräg nach außen-oben gerichtete Verankerungsrippen od. dgl. trägt. Durch den Fußteil wird die Einsetztiefe begrenzt. Überdies stützen sich sowohl der Fußteil als auch die Verankerungsrippen im eingefüllten Material ab und verhindern so ein Herausziehen bzw. eine Lockerung der eingebetteten Randbegrenzung. Der Effekt kann dadurch verstärkt werden, daß die Flansche des Fußteiles nach oben gerichtete Randleisten aufweisen.

Die Anpaßbarkeit der Randbegrenzung an verschiedenste Einsatzfälle und Einbaumöglichkeiten wird dadurch entscheidend verbessert, daß das Strangpreßprofil aus wenigstens zwei Materialien besteht, wobei ein Innenteil des eine Röhre bildenden Kopfes und ein anschließender, bis zum unteren Rand reichender Innenteil des Steges aus steifem, tragfähigem Material und ein den Kopf wenigstens unterseitig sowie den Steg unter Bildung der Flansche und der vorzugsweise vorgesehenen Verankerungsrippen od. dgl. umschließende Ummantelung aus weicherem, z. B. gummielastischem Kunststoff oder Gummimaterial hergestellt sind. Das steifere Material gibt der Randbegrenzung beim Einbau eine ausreichende Standfestigkeit und gewährleistet die Formhaltigkeit. Der weichere Mantel ist nachgiebig und erleichtert so die ausreichende Befüllung des Grabens bzw. Schlitzes, wobei bei hartem Untergrund der Schlitz etwas schmäler als die maximale durch den Fußteil bzw. die Verankerungsrippen bestimmte Breite der Randbegrenzung ausgeführt werden kann, so daß sich die letztgenannten Teile beim Einsetzen biegen und ähnlich wie die Halteteile eines Dübels an den Schlitzwandungen angreifen. Vorzugsweise werden die Materialien so gewählt, daß es möglich wird, das Strangpreßprofil in beliebiger Länge herzustellen und für den Transport zu Rollen aufzuwickeln.

Nach einer Weiterbildung sind im Kopfbereich, vorzugsweise zwischen Innenteil und Mantel, Längsnuten oder Rinnen zur Aufnahme von Verbindungsstücken bei einer Aneinanderreihung von Teilstücken der Randbegrenzung vorgesehen.

Die Baugröße, also der Durchmesser des Kopfteiles und die Erstrekkung des Steges von diesem Kopfteil richtet sich nach dem jeweiligen Verwendungszweck. Diese Größe wird bei einfachen Gartenwegen kleiner als bei größeren Wegen und Gehsteigen gewählt werden. Bei Gartenwegen kann man z. B. vor der Verlegung von Trittplatten im Sandbett bereits die Randbegrenzungen anbringen und ausrichten und nach ihnen die Verlegung der Trittplatten vornehmen, wobei man in den meisten Fällen trachten wird, die Oberseite des Kopfteiles mit der Trittebene fluchten zu lassen, so daß das Überfahren mit einem Rasenmäher keine Schwierigkeiten mit sich bringt. Bei einem Rasen verhindert die Randbegrenzung ein Überwuchern des Bewuchses auf den Gehweg.

Durch die besondere Ausgestaltung der Randbegrenzung sind verschiedene zusätzliche Einsätze möglich. Ein solcher Einsatz ist die Verwendung des hohlen Kopfteiles ais Kabelkanal, wobei die eingesetzten Kabel beispielsweise zu Außenleuchten, Außensteckdosen, Torantrieben, Klingeln, Gegensprecheinrichtungen usw. führen können.

Eine weitere Möglichkeit ist die Verwendung des Kopfteiles als Wasserleitung bzw. als Führung für einen Wasserschlauch, etwa für die Gartenbewässerung.

Nach einer Weiterbildung ist in dem Kopfteil nahe der Oberseite ein über die Länge durchlaufender Metallstreifen eingesetzt. Dieser Metallstreifen kann nach einer Möglichkeit zu einer manchmal vorgeschriebenen Erdungsmeßsonde führen, dient aber vorzugsweise als Leiteinrichtung, nach der sich ein Blinder mit einem am Blindenstock eingebrachten Sensor ausrichten kann.

Schließlich kann nach einer der vielen weiteren Möglichkeiten wenigstens ein Außenbereich des Kopfteiles mit einem Insekten oder Schnecken abweisenden Mittel, z. B. einem Duftstoff imprägniert oder aus einem eine Abweisung dieser Tiere auf elektrostatischem Wege erzeugenden Material bzw. einer entsprechenden Materialkombination hergestellt sein. Eine elektrostatische Abweisung läßt sich erzielen, wenn in bzw. auf zwei benachbarten Längsstreifen des Spritzgußmaterials verschiedene Metalle, etwa Kupfer und Zink von einem Isolierstreifen getrennt angebracht sind.

In Weiterbildung der Erfindung wird der nachleuchtende Teil der Randbegrenzung dadurch gebildet, daß der am Befestigungssteg sitzende Kopfteil eine einteilig angeformte Schicht aus dem die Leuchtfarbe aufweisenden Material besitzt. Eine einfache Möglichkeit zur Verankerung im Boden ergibt sich dadurch, daß der Steg ein sägezahnartiges Profil aufweisende Längsrippen besitzt.

Eine besonders einfache Herstellung wird gewährleistet, wenn die die Leuchtfarbe aufweisende Schicht bei der Fertigung durch Koextrusion mit dem übrigen Körper der Randbegrenzung aufgebracht ist. Es lassen sich in dieser Form unter geringem Materialaufwand auch relativ großflächige Leuchtstreifen herstellen. Entscheidend ist ferner, daß die Fertigung in einem einzigen Arbeitsgang möglich wird, so daß aus dem Strangpreßmaterial lediglich die benötigten Längen abgeschnitten werden müssen.

Wenn auch andere Kunststoffmaterial mit verschiedenen Füllstoffen eingesetzt werden können, wird derzeit vorzugsweise für den Körper der Randbegrenzung Hart-PVC und für die koextrudierte Schicht Weich-PVC mit eingelagerten Leuchtfarbepigmenten, insbesondere auf Phosphorbasis oder einem anderen geeigneten luminiszierende Eigenschaften aufweisenden Pigmentmaterial verwendet.

Weitere Einzelheiten und Vorteile des Erfindungsgegenstandes entnimmt man der nachfolgenden Zeichnungsbeschreibung.

In der Zeichnung ist der Erfindungsgegenstand beispielsweise veranschaulicht. Es zeigen
- Fig. 1: eine erste Ausführungsform einer erfindungsgemäßen Randbegrenzung im Schnitt ,
- Fig. 2: in größerem Maßstab einen Schnitt durch den Kopfteil,
- Fig. 3 und 4: in gleicher Darstellungsweise eine größere Randbegrenzung,
- Fig. 5: eine einfachere Ausführungsform der Randbegrenzung im Schaubild,
- Fig. 6: in größeren Maßstab einen Schnitt durch den Kopfteil der Randbegrenzung nach Fig. 5 und
- Fig. 7: in der Darstellungsweise nach Fig. 6 einen Kopfteil für eine größere Randbegrenzung

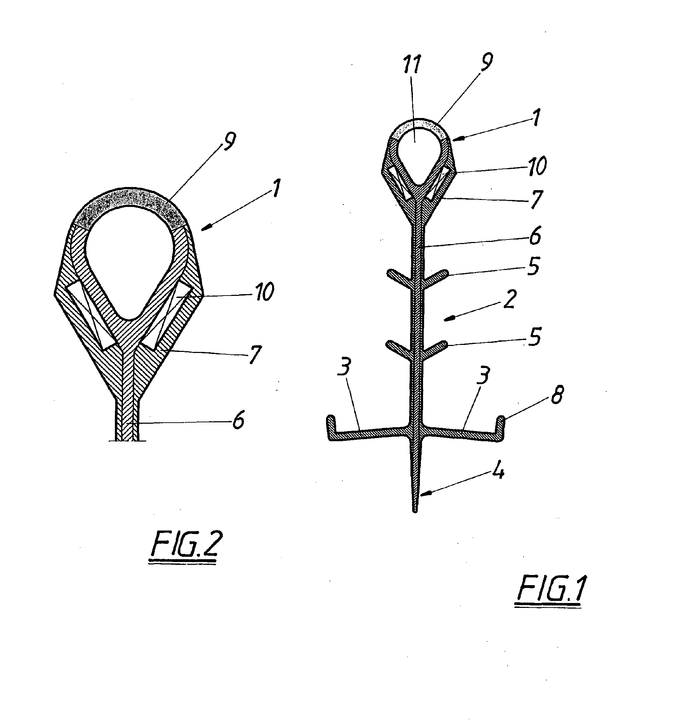

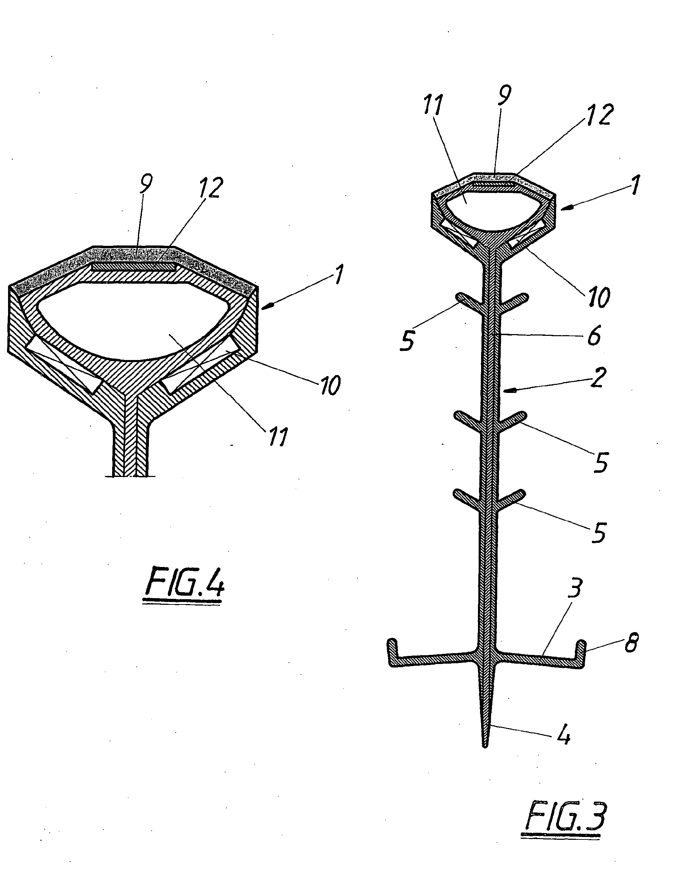

Da sich die Ausführung nach den Fig. 1 und 2 von jener nach den Fig. 3 und 4 nur durch die Baugröße und Kopfform unterscheidet, wurden für alle Figuren einheitliche Bezugszeichen verwendet.

Die Randbegrenzung besitzt einen Kopfteil 1 und einen Stützsteg 2, an dem ein aus Flanschen 3 gebildeter Fußteil über einem zu einer Schneide verjüngten Steg-ende 4 und Halterippen 5 angeformt sind.

Der Begrenzungsteil ist in der Grundausführung aus drei verschiedenen Materialien herstellt. Dabei besteht ein Innenteil 6, der nach Fig. 1 den Großteil des Kopfteiles 1 und den geraden Teil des Steges 2 umfaßt aus einem steiferen Kunststoff eine dem Unterteil des Kopfteiles 1 und den Steg ummantelnde Außenschicht 7, aus der auch die Flansche 3 mit ihren Randleisten 8 und die Rippen 5 gebildet sind, aus einem weicheren, gummielastischen Material und ein oberer Abschlußteil 9 des hohlen Kopfteiles 1 aus einem selbstleuchtenden Material. Im Kopfbereich sind zwischen der Außenschicht 7 und dem inneren härteren Teil des Kopfteiles 1 Längsnuten 10 ausgeformt, die in bei der Aneinanderreihung vom Teilstück der Randbegrenzung Verbindungsteile eingesetzt werden können.

Die Herstellung erfolgt in der Weise, daß in einem ersten Extruder der Innenteil 6, in einem weiteren Extruder der Abschlußteil 9 und in noch einem weiteren Extruder die gesamte Außenschicht 7 angespritzt wird. Der Kopfteil 1 bildet ein Rohr, dessen Höhlung 11 als Wasserleitung, Kabelkanal oder Aufnahme für einen Gartenschlauch Verwendung finden kann.

Die Ausführungsform nach den Fig. 3 und 4 unterscheidet sich von jener nach den Fig. 1 und 2 nur dadurch, daß die Abmessungen größer sind und der Kopfteil 1 gegenüber der Ausführung nach Fig. 1 und 2 eine andere Form besitzt, wobei aus dem härteren Material 6 ein geschlossener Innenteil des Kopfteiles 1 geformt und der Teil 9 in Form einer Auflage angebracht ist. Diese Auflage 9 schließt einen Metallstreifen 12 ein.

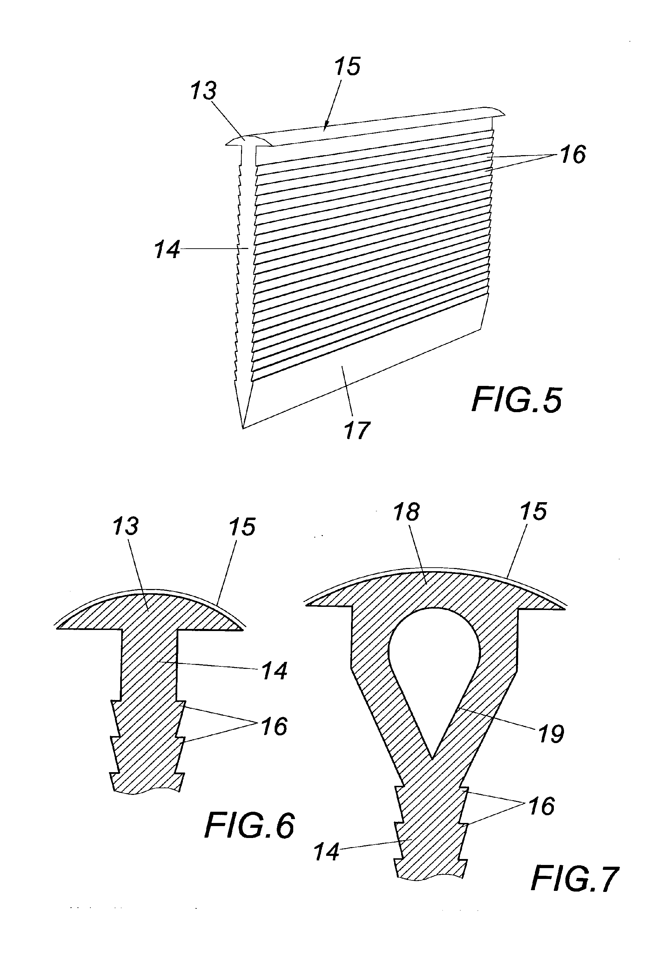

Die Randbegrenzung nach den Fig. 5 und 6 besitzt wieder einen Kopfteil 13 und einen Befestigungssteg 14, wobei am Kopfteil 13 durch Koextrusion bei der Herstellung eine dünne, festhaftende Schicht 15 aus einem eine Leuchtfarbe aufweisenden Material angebracht ist, die insbesondere aus Weich-PVC mit als Füllstoff eingelagerten Leuchtfarbepigmenten, z. B. auf Phosphorbasis besteht. Der Befestigungssteg 14 ist mit Rückhaltern in Form von ein Sägezahnprofil aufweisenden Längsrippen 16 versehen und kann unten zu einer Schneide 17 geformt sein, um das Eintreiben in weicheren Boden zu erleichtern.

Die meist für etwas größere Randbegrenzungen gedachte Variante nach Fig. 7 sieht vor, daß der Kopfteil 18 zu einer Röhre 19 geformt ist, die, wie die Röhren bzw. Hohlräume nach den Fig. 1 bis 4 für die dort angegebenen Zwecke Verwendung finden kann.

## Patentansprüche

1. Randbegrenzung, insbesondere für Gartenwege, Gehwege und Gehsteige, mit einem Längsträger, der mit einem Leuchtmittel versehen und mit Halterungen im Untergrund verankerbar ist, **dadurch gekennzeichnet, daß** bei der aus einem Strangpreßprofil bestehenden Randbegrenzung ein über die Länge durchlaufender Befestigungssteg (2, 14) als an einen Kopfteil (1, 13, 18) anschließender Längsträger vorgesehen ist, der Kopfteil oberseitig aus einem Streifen (9) aus einem eine Leuchtfarbe aufweisenden Material besteht oder eine Auflage (15) aus einem entsprechenden Material besitzt und mit dem durchlaufenden Befestigungssteg (2, 14) in einen Bodenschlitz, Graben od. dgl. des Untergrundes einsetzbar ist, so daß er durch Ausfüllen des Grabens bzw. Schlitzes z. B. mit dem Aushubmaterial bzw. bei einem festen, z. B. aus Asphalt bestehenden Untergrund mit einen vorzugsweise mit dem Schlitzrand abbindenden Füllmaterial verankerbar ist.

2. Randbegrenzung nach Anspruch 1, **dadurch gekennzeichnet, daß** der durchlaufende Steg (2) mit Abstand vom Kopf (1) und seinem gegebenenfalls zu einer Schneide ausgebildeten unteren Rand (4) seitlich vorstehende einen Fußteil bildende Stützflansche (3) und vorzugsweise zwischen diesen und dem Kopf kürzere, schräg nach außen-oben gerichtete Verankerungsrippen (5) od. dgl. trägt.

3. Randbegrenzung nach Anspruch 1 oder 2, **dadurch gekennzeichnet, daß** die Flansche (3) des Fußteiles (2) nach oben gerichtete Randleisten (8) aufweisen.

4. Randbegrenzung nach einem der Ansprüche 1 bis 3, **dadurch gekennzeichnet, daß** das Strangpreßprofil aus wenigstens zwei Materialien besteht, wobei ein Innenteil des eine Röhre bildenden Kopfes und ein anschließender, bis zum unteren Rand reichender Innenteil des Steges aus steifem, tragfähigem Material (6) und ein den Kopf (1) wenigstens unterseitig sowie den Steg (2) unter Bildung der Flansche (3) und der vorzugsweise vorgesehenen Verankerungsrippen (5) od. dgl. umschließende Ummantelung (7) aus weicherem, z. B. gummielastischem Kunststoff oder Gummimaterial hergestellt sind.

5. Randbegrenzung nach einem der Ansprüche 1 bis 4, **dadurch gekennzeichnet, daß** im Kopfbereich, vorzugsweise zwischen Innenteil (6) und Mantel (7), Längsnuten (10) oder Rinnen zur Aufnahme von Verbindungsstücken bei einer Aneinanderreihung von Teilstücken der Randbegrenzung vorgesehen sind.

6. Randbegrenzung nach einem der Ansprüche 1 bis 5, **gekennzeichnet durch** die Verwendung des hohlen Kopfteiles (1) als Kabelkanal.

7. Randbegrenzung nach einem der Ansprüche 1 bis 5, **gekennzeichnet durch** die Verwendung des Kopfteiles (1) als Wasserleitung bzw. als Führung für einen Wasserschlauch.

8. Randbegrenzung nach einem der Ansprüche 1 bis 7, **dadurch gekennzeichnet, daß** in dem Kopfteil (1) nahe der Oberseite ein über die Länge durchlaufender Metallstreifen (12) eingesetzt ist.

9. Randbegrenzung nach einem der Ansprüche 1 bis 8, **dadurch gekennzeichnet, daß** wenigstens ein Außenbereich des Kopfteiles (1) mit einem Insekten oder Schnecken abweisenden Mittel, z. B. einem Duftstoff imprägniert ist oder aus einem eine Abweisung dieser Tiere auf elektrostatischem Wege erzeugenden Material bzw. einer entsprechenden Materialkombination hergestellt ist.

10. Randbegrenzung nach Anspruch 1, **dadurch gekennzeichnet, daß** der am Befestigungssteg (14) sitzende Kopfteil (13) wenigstens oberseitig eine einteilig angeformte Schicht (15) aus dem die Leuchtfarbe aufweisenden Material besitzt.

11. Randbegrenzung nach Anspruch 10, **dadurch gekennzeichnet, daß** der Steg (14) Rückhalter bildende Vertiefungen, nämlich insbesondere ein sägezahnartiges Profil aufweisende Längsrippen (16) aufweist.

12. Randbegrenzung nach den Ansprüchen 10 und 11, **dadurch gekennzeichnet, daß** die die Leuchtfarbe aufweisende Schicht (15) bei der Fertigung durch Koextrusion mit dem übrigen Körper (13, 14, 18) der Randbegrenzung aufgebracht ist.

13. Randbegrenzung nach Anspruch 12, **dadurch gekennzeichnet, daß** der Körper (13, 14, 18) der Randbegrenzung aus Hart-PVC und die koextrudierte Schicht (15) aus Weich-PVC mit eingelagerten Leuchtfarbesigmenten, z. B. auf Phosphorbasis besteht.
